# EUROPEAN PATENT APPLICATION

(11) **EP 0 791 901 A2**
(43) Date of publication of application: **27.08.1997**
(21) Application number: 97301134.9
(22) Date of filing: 21.02.1997
(51) Int. Cl.: G07F 7/10, G07F 19/00

(54) **Network transaction system**

(30) Priority: 21.02.1996 JP 70834/96
(71) Applicant: Card Call Service Co., Ltd., Shibuya-ku, Tokyo (JP)
(72) Inventor: Baba, Yoshimi, Funabashi-shi, Chiba-ken (JP)
(74) Representative: Godsill, John Kenneth

(57) **Abstract**

When a card holder who owns a payment card purchases merchandise from a seller via online communications through a network, he transmits order data relative to the purchase to the seller, that order data including parts relevant to respective ones of parties other than the card holder, e.g. the seller, a card manager, and a delivery service company, and which parts are encrypted by the terminal of the card holder using respective common cryptokeys which are effective only between the card holder and the respective other parties. The data is transmitted through the terminal of the seller to the terminals of the other parties. The other parties, on receipt of the transmitted data, decrypt that part of the data relevant to them using the relevant common cryptokeys.

## Description

The present invention relates to a transaction system for allowing users to conduct operations or transactions via online communications on the Internet, personal computer communication networks, etc., and more particularly to an electronic transaction system which uses security or identification cards such as credit cards, debit cards, etc., e.g. for settling payments.

A growing number of users of computer networks including the Internet, personal computer communication networks, etc. are placing online orders to buy merchandise from sellers including electronic malls on the Internet and shops on the personal computer communication networks.

In order to conduct such an online transaction, it is customary for the initiator of the transaction, who we shall call the buyer, to have readily available an authorisation card such as a credit card or a debit card. Various data, such as the name, address and telephone number of the buyer or card holder, the type, quantity and other details of the merchandise to be purchased and the card number and expiration date of the card are transmitted from the terminal of the card holder through the network to the transaction recipient, who we shall call the seller. Based on the data received by the terminal of seller, the seller carries out various processes to have the card manager (card company) authenticate the card holder, before actioning the transaction, e.g. ship merchandise or ask a delivery service company to ship merchandise and bill the card company for the price of the merchandise. Based on the data sent from the seller about the name, address, and telephone number of the card holder and the card number and expiration date of the card, the card company gives authentication of the card holder to the seller. In a commercial transaction, the card company also withdraws funds from the account of the card holder to settle the payment based on the data of the price of the merchandise sent from the seller.

Electronic systems for conducting such online transactions have heretofore been open to various dangers including hacking (interception of communication data), cracking (substitution of communication data), and impersonation of the card holder, the merchant server (the terminal of the seller), and the acquirer gateway (the terminal of the card manager) .

Of these attacks to the electronic systems, the impersonation of the card holder can be prevented to a considerable extent by a database of card numbers which is possessed and managed by the card manager. Furthermore, even when a card holder is impersonated, because an upper limit is usually established for the amount of money that an be settled by the card of the card holder, any damage which the card holder may suffer is relatively small.

However, the impersonation of the seller tends to cause a lot of damage since the false seller may possibly illegally collect and use card information such as of a large number of cards, expiration dates, etc.

In order to provide system security, it has been the general practice to carry out communications using an identification number (ID number) and password of a card holder or corresponding data, and to construct a so-called closed user group for preventing existing transactions with the card from being affected even if the identification number and password are stolen.

One could also attempt to improve system security by including encryption of communication data with a stream common-key cipher using DES (Data Encryption Standard), authentication with a public-key cipher such as the RSA system, etc.

In accordance with one aspect of the present invention there is provided an electron transaction system for conducting transactions via online communications on a network between terminals of parties including at least a seller, a card holder who uses a payment card to purchase merchandise from the seller, and a card manager for managing payments made by the payment card, comprising means in the terminal of the card holder for encrypting partial data with respect to the parties other than the card holder with common cryptokeys which are effective only between the card holder and the parties other than the card holder, among order data produced when the card holder purchases merchandise from the seller using the payment card, and then transmitting encrypted order data including the encrypted partial data through the terminal of the seller to the parties other than the card holder, means in the terminals of the parties other than the card holder, for decrypting only the encrypted partial data with respect to the parties other than the card holder, among the encrypted order data, using the respective common cryptokeys, means in the terminal of the card manager, for allowing commercial transactions, including issuance of an authentication of the card holder to the seller, to be made with respect to the card manager, based on the partial data decrypted by the terminal of the card manager, and means in the terminal of the seller, for allowing commercial transactions, including delivery of the merchandise, to be made with respect to the seller, based on the partial data decrypted by the terminal of the seller and the authentication of the card holder issued from the card manager.

In one embodiment, a card holder who wishes to buy purchase from the seller using the payment card encrypts, among the order data, partial data with respect to the other parties including the seller, the card manager, etc. using common cryptokeys effective only between the parties, and then transmits encrypted order data including the encrypted partial data from the terminal of the card holder through the terminal of the seller to the terminals of the parties. The order data which are thus encrypted are securely protected from unauthorized access.

When the parties other than the card holder, i.e. the seller and the card manager, receive the transmitted encrypted order data, the encrypted partial data among the encrypted order data are decrypted using the common cryptokeys effective between the parties. Since in this example each of the parties does not have a common cryptokey for decrypting the partial data relative to the other parties, it is unable to decrypt and comprehend those partial data. Stated otherwise, each of the parties can comprehend details of the order data only within a range that is concerned with the party, and hence cannot steal any partial data that do not involve itself. The card manager is allowed to make commercial transactions, e.g. including issuance of an authentication of the card holder to the seller, with respect to the card manager based on the partial data decrypted by the terminal of the card manager, and the seller is allowed to make commercial transactions, e.g. including delivery of the merchandise, with respect to the seller, based on the partial data decrypted by the terminal of the seller and the authentication of the card holder issued from the card manager. In this manner, electronic data verifying operations, such as commercial transactions, can be conducted via online communications.

Inasmuch as the order data can encrypted and transmitted, the security of the order data can be maintained. In the preferred embodiment each of the parties other than the card holder is supplied with minimum necessary data among the order data. Even if a third party impersonates the seller for example, the false seller is unable to access information involving the card manager, e.g. the card number and expiration date of the payment card, and hence cannot achieve anything from the impersonation of the seller. Accordingly, the system is effective to ensure security of online operations, such as commercial transactions, through a network while making unlawful impersonation of the parties more difficult, if not possible. In the example the encrypted order data generated by the terminal of the card holder are transmitted through the terminal of the seller to the other parties. Therefore, when the card holder purchases merchandise via online communications, the card holder needs to encrypted order data only to the seller. It is thus relatively simple to conduct online commercial transactions using the electronic commerce system.

The order data may include data of a destination (which may not necessarily be the address of the card holder) of delivery of the merchandise, and the parties include a delivery service company.

In this case, the data of the destination can be encrypted using only a common cryptokey which is effective only between the card holder and the delivery service company, and the delivery service company is allowed to deliver the merchandise based on the partial data, including the data of the destination, decrypted by the terminal of the delivery service company and instructions given from the seller. Inasmuch as the data of the destination are comprehended only by the delivery service company, the privacy of the destination is protected.

The order data may include data of a card number and expiration date of the payment card, and the data of the card number and expiration date may be encrypted using only the common cryptokey which is effective only between the card holder and the card manager. Therefore, the data of the card number and expiration date, which are the most important in settling payments for online commercial transactions using the payment card, are comprehended by the card manager only when the card manager decrypts the encrypted order data. Stated otherwise, any parties other than the card manager and the card holder are unable to know the data of the card number and expiration date of the payment card. As a consequence, security of the system is effectively maintained, and any unlawful impersonation by willful parties of the seller, which is the most dangerous act against online commercial transactions, is effectively prevented.

The common cryptokeys may be separately established and distributed between the card holder and other parties. Preferably, however, identifiers which are public and peculiar respectively to the parties other than the card holder may be entered into a secret private key peculiar to the cardholder to generate the common cryptokeys which are effective only between the card holder and the parties other than the card holder, and an identifier which is public and peculiar to the card holder may be entered into respective secret private keys peculiar to the parties other than the card holder to generate the common cryptokeys which are effective only between the card holder and the parties other than the card holder. The identifier may comprise any attribute which is public and peculiar to each party, e.g. the name, address, mail address or domain name on the network, or their combination of each party.

Consequently, each of the parties including the card holder enters the identifier of another party, with which a common cryptokey is to be shared, into the secret private key of its own to generate the common cryptokey. Simply by entering identifier of the other party into its own secret private key, therefore, each party can generate the common cryptokey required for commercial transactions without having to establish and distribute the common cryptokey in advance.' Such a system can thus be highly simple and versatile. As there is no need to distribute common cryptokeys in advance, the security of communication data is reliably maintained while the communication data are being transmitted through the network, and the safety of the electronic commerce system is high.

The above process of generating common cryptokeys is disclosed in "NON-PUBLIC KEY DISTRIBUTION/Advances in Cryptography: Proceedings of CRYPTO '82/Plenum Press, 1983, pp. 231 - 236" by Rolf Blom, "An Optimal Class of Symmetric Key Generation Systems/Advances in Cryptology: EUROCRYPT '84/Springer LNCS 209, 1985, pp. 335 - 338" by Rolf Blom, and Japanese patent publication No. 5-48980, for example, and hence will not be described in detail below.

Preferably, each of the parties communicates with other parties to which the encrypted order data are to be transmitted prior to the transmission of the encrypted order data for thereby confirming the other parties. Such advance confirmation of the parties is effective to prevent damage which would otherwise be caused by impersonation of the seller, the card manager or the like. In this way, the safety of the system can be further increased.

Further aspects of the invention are exemplified by the attached claims.

For a better understanding of the invention, and to show how the same may be carried into effect, reference will now be made, by way of example, to the accompanying drawings, in which:-
FIG. 1 is a block diagram of an electronic transaction system according to one embodiment of the present invention;
FIG. 2 is a flowchart of a data processing sequence at a card holder in the electronic transaction system shown in FIG. 1; and
FIG. 3 is a flowchart of data processing sequences at parties other than the card holder in the electronic transaction system shown in FIG. 1.

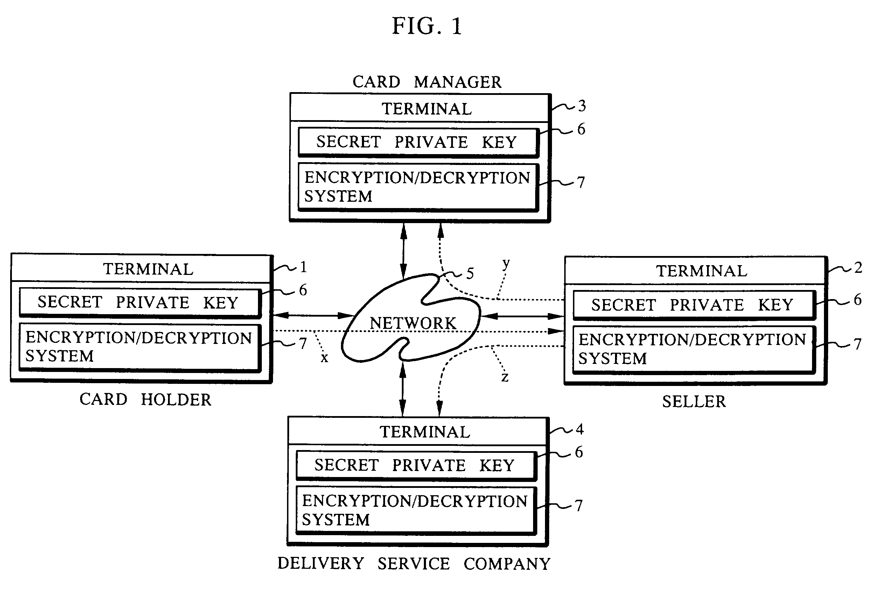

FIG. 1 shows an electronic transaction system which comprises a terminal 1 of a card holder who owns a payment card (not shown) such as a credit card, a debit card, or the like, a terminal 2 of a seller, a terminal 3 of a card manager (card company) which manages payments by way of payment cards, and a terminal 4 of a delivery service company which delivers merchandise handled by the seller. The terminals 1, 2, 3, 4 are connected for communication with each other by a network such as the Internet, a personal computer communication network, or the like. The card holder, the seller, the card manger, and the delivery service company are parties to an electronic commercial transaction described later on.

Each of the terminals 1, 2, 3, 4 comprises a computer machine such as a personal computer or the like. Each of the terminals 1, 2, 3, 4 contains, as software or hardware implementations, a secret private key 6 which is a common cryptokey generation system for generating a common cryptokey for ciphertext communications between arbitrary parties and an encryption/decryption system 7 for encrypting and decrypting communication data with the common cryptokey. These systems 6, 7 have previously been sent to the parties from a central organization (not shown) which issues cryptokeys and performs other tasks.

As can be seen from the articles by Rolf Blom and Japanese patent publication No. 5-48980 referred to above, the secret private key 6 is peculiar to each of the parties, and generates a common cryptokey with respect to another party to communicate with when an identifier which is public and peculiar to each party, such as the name, address, or the like of the other party, is entered through each of the terminals 1, 2, 3, 4.

The encryption/decryption system 7 serves to encrypt communication data with the common cryptokey using known DES or the like (at a transmission side for the communication data) and decrypt communication data which have been encrypted (at a reception side for the communication data).

An electronic commercial transaction is conducted using the above electronic commerce system as follows:

It is assumed that each of the parties to the electronic commerce system is communicating with another party to which encrypted order data (described later on) are to be transmitted, through their terminals 1 - 4 over the Internet, the personal computer communication network, or the like, and that each of the parties between which to transmit encrypted order data has confirmed in advance that the other party legitimately exists, i.e., has authenticated the other party.

The card holder has acquired beforehand merchandise information of the seller through either communications. between its own terminal 1 and the terminal 2 of the seller to see a home page of the seller, for example, or a browse of catalog data of the seller based on a recording medium such as a CD-ROM, a magazine, or the like.

When the card holder is going to buy desired merchandise from the seller, the card holder asks in advance the seller to send the data of an order form to the card holder. Alternatively, the card holder may obtain the data of an order form from a CD-ROM or the like in advance.

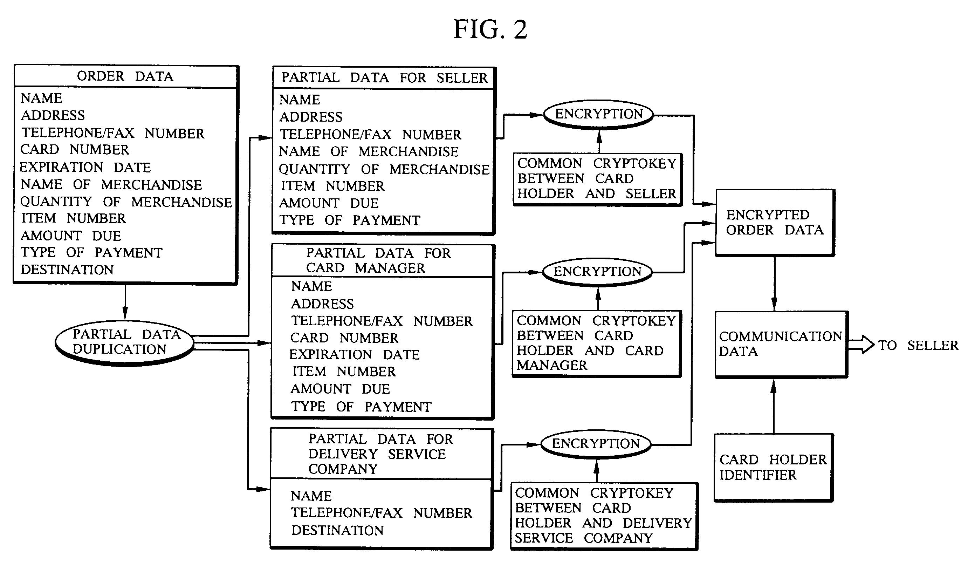

Then, using the order form, the card holder enters order data to purchase the desired merchandise with its own payment card, through the terminal 1. As shown in FIG. 2, the order data which are entered through the terminal 1 include the name, address, telephone number, and FAX number of the card holder, the card number and expiration date of the payment card owned by the card holder, the name, quantity, and item number of the merchandise, the amount due, the type of payment (installment, full payment, etc.), and the destination of delivery of the merchandise (including the name, address, etc. of the destination).

The order data are not limited to the above details, but may contain information necessary for the seller, the card manager, and the delivery service company to perform their tasks relative to a commercial transaction, e.g., identification by the seller of the card holder who has placed an order and details of the order, authentication of the card holder by the card manager, settlement of the amount due, delivery of the merchandise by the delivery service company, when the card holder is going to buy the merchandise using its own payment card.

After the above order data are entered, the card holder extracts, from the order data, predetermined partial data with respect to the seller, the card manager, and the delivery service company from the order data, and duplicates the extracted partial data. For example, with respect to the seller, the card holder duplicates partial data that specify the card holder and the details of the order, i.e., the name, address, telephone number, and FAX number of the card holder, the name, quantity, and item number of the merchandise, the amount due, and the type of payment. With respect to the card manager, the card holder duplicates partial data that authenticate the card holder and settles the payment, i.e., the name, address, telephone number, and FAX number of the card holder, the card number and expiration date of the payment card owned by the card holder, the item number of the merchandise, the amount due, and the type of payment. With respect to the delivery service company, the card holder duplicates partial data required to delivery the merchandise, i.e., the name, address, telephone number, and FAX number of the card holder, and the destination of delivery of the merchandise.

A procedure for enabling the card holder to extract and duplicate the above partial data, or a software program for automatically carrying out such a procedure has been in advance to the card holder when the data of the order form have been sent from the seller to the card holder. Therefore, the card holder extracts and duplicates the above partial data according to the procedure or the software program which have been given to the card holder. The partial data with respect to the above parties are not limited to the data illustrated above, but some of the illustrated data may be dispensed with or additional data may be added thereto. For example, the data of the FAX number of the card holder may not be needed by any of those parties, the data of the item number of the merchandise may not be needed by the card manager due to the law and custom in the country in which the electronic commerce system is used, and the data of the destination of delivery of the merchandise may be needed by the seller.

Then, the card holder enters respective identifiers of the seller, the card manager, and the delivery service company into the secret private key 6 of the terminal 1 for thereby enabling the secret private key 6 to generate common cryptokeys for ciphertext communications between the card holder and those parties. Since the delivery service company is designated by the seller, the identifier of the delivery service company or information, e.g., the name of the delivery service company, required for the card holder to recognize the identifier of the delivery service company has been given in advance to the card holder when the data of the order form have been sent from the seller to the card holder. The card holder has already recognized the identifiers of the seller and the card manager because the seller and the card manager have been designated by the card holder itself.

After the card holder duplicates the partial data with respect to the seller, the card manager, and the delivery service company from the order data, and generates the common cryptokeys for use between the card holder and those parties, the card holder instructs the encryption/decryption system 7 to encrypt those partial data using the common cryptokeys, and transmits one set of communication data comprising encrypted order data including the encrypted partial data and the identifier of the card holder from the terminal 1 through the network 5 to the terminal 2 of the seller as indicated by the broken-line arrow "x" in FIG. 1. The identifier of the card holder which is transmitted together with the encrypted order data is not encrypted. Instead of the identifier of the card holder, information, e.g., the name and address of the card holder, which enables the other parties to specify the identifier of the card holder may be transmitted together with the encrypted order data.

Since the encrypted order data, which make up a major part of the communication data, have been encrypted, any third parties which are not the seller, the card manager, and the delivery service company cannot read the communication data, and hence the communication data are securely protected from unauthorized access while in transmission through the network 5.

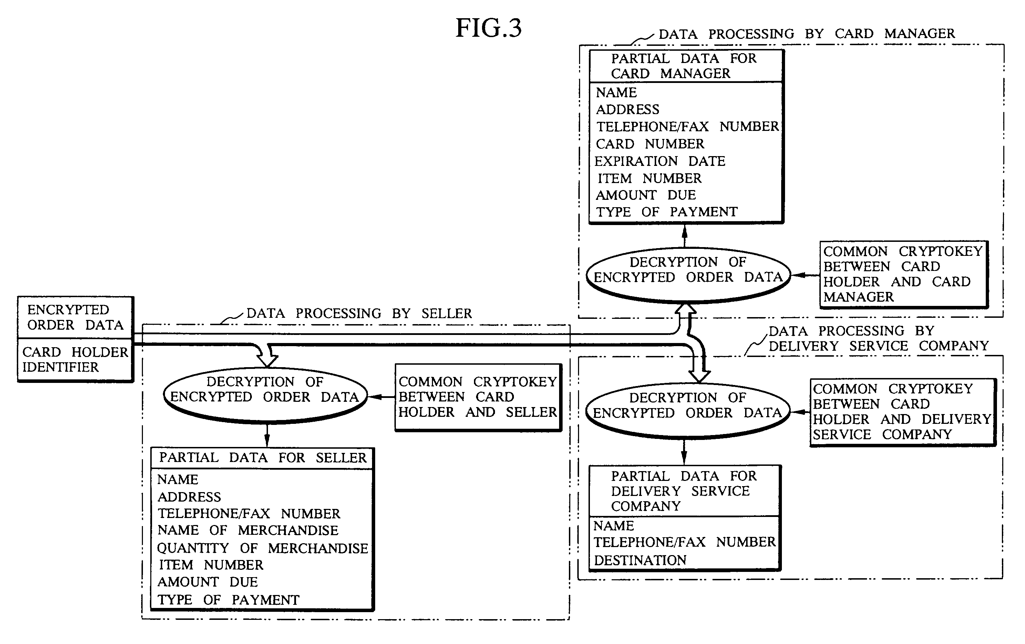

When the seller receives the communication data, i.e., the encrypted order data and the identifier of the card holder, through its own terminal 2, the seller enters the identifier contained in the communication data into the secret private key 6 in the terminal 2, thereby enabling the secret private key 6 to generate the common cryptokey for use between the card holder and the seller. As shown in FIG. 3, using the generated common cryptokey, the seller instructs the encryption/decryption system 7 in the terminal 2 to decrypt the partial data with respect to the seller among the encrypted order data. The seller now acquires the data needed by the seller, i.e., the name, address, telephone number, and FAX number of the card holder, the name, quantity, and item number of the merchandise, the amount due, and the type of payment.

The partial data with respect to the parties, i.e., the card manager and the delivery service company, other than the seller, have been encrypted with the common cryptokeys different from the common cryptokey for use between the seller and the seller. Consequently, the seller cannot decrypt the partial data with respect to the card manager and the delivery service company, and hence cannot comprehend the card number and expiration date, which are data concerned with the card manager, and the destination of delivery of the merchandise, which is data concerned with the delivery service company.

Furthermore, the seller transmits the encrypted order data and the identifier of the card holder from the terminal 2 through the network 5 to the terminal 3 of the card manager as indicated by the broken-line arrow "y" in FIG. 1. While the seller may transmit all the received data to the card manager, the seller may transmit only the partial data with respect to the card manager, among the encrypted order data, together with the identifier of the card holder to the card manager.

When the card manager receives the encrypted order data and the identifier of the card holder, through its own terminal 3, the card manger enters the identifier of the card holder into the secret private key 6 in the terminal 3, thereby enabling the secret private key 6 to generate the common cryptokey for use between the card holder and the card manager. As shown in FIG. 3, using the generated common cryptokey, the card manager instructs the encryption/decryption system 7 in the terminal 3 to decrypt the partial data with respect to the card manager among the encrypted order data. The card manager now acquires the data needed by the card manager, i.e., the name, address, telephone number, and FAX number of the card holder, the card number and expiration date of the payment card owned by the card holder, the name, quantity, and item number of the merchandise, the amount due, and the type of payment. At this time, the card manager is unable to comprehend those data of the encrypted order data other than the partial data with respect to the card manager, e.g., the destination of delivery of the merchandise, which is data concerned with the delivery service company.

Based on the data of the name and telephone number of the card holder and the card number and expiration date of the payment card owned by the card holder, the card manager authenticates the card holder, i.e., determines whether the card holder is a legitimate card user or not, and transmits the result of authentication to the seller. If the card holder is a legitimate card user, then the card manager will carry out a process of withdrawing funds from the account of the card holder based on the data relative to the amount due and the type of payment.

When the seller receives the result of authentication from the card manager and if the result of authentication indicates that the card holder is a legitimate card user, the seller transmits the encrypted partial data and the identifier of the card holder from the terminal 2 through the network 5 to the terminal 4 of the delivery service company as indicated by the broken-line arrow "z" in FIG. 1. Based on the acquired partial data, the seller also transmits a request for delivery of the merchandise to the delivery service company. If necessary, the seller lays in the merchandise. The seller may transmit only the partial data with respect to the delivery service company, among the encrypted order data, together with the identifier of the card holder to the delivery service company.

When the delivery service company receives the encrypted order data and the identifier of the card holder, through its own terminal 4, the delivery service company enters the identifier of the card holder into the secret private key 6 in the terminal 4, thereby enabling the secret private key 6 to generate the common cryptokey for use between the card holder and the delivery service company. As shown in FIG. 3, using the generated common cryptokey, the delivery service company instructs the encryption/decryption system 7 in the terminal 4 to decrypt the partial data with respect to the delivery service company among the encrypted order data. The delivery service company now acquires the data needed by the delivery service company, i.e., the name, telephone number, and FAX number of the card holder, and the destination of delivery of the merchandise. At this time, the delivery service company is unable to comprehend those data of the encrypted order data other than the partial data with respect to the delivery service company, e.g., the card number and expiration date of the payment card.

Based on the acquired data and instructions from the seller, the delivery service company carries out a process of delivering the merchandise to the destination.

In the above electronic commerce system, the partial data with respect to the seller, the card manager, and the delivery service company, among the order data generated by the card holder, are encrypted using the common cryptokeys for use between the card holder and those parties, and the encrypted partial data are transmitted to the parties. Therefore, the security of the order data is maintained while in transmission through the network 5. Each of the parties is able to acquire necessary data among the order data using the common cryptokey for use between the card holder and the party. Stated otherwise, each of the parties can acquire those necessary data only. Therefore, the seller and the delivery service company, for example, are unable to know the card number and expiration date of the payment card, which are the most important data for commercial transactions using the payment card. Even if a third party impersonates the seller or the delivery service company, the third party cannot achieve anything from the impersonating act because the third party is unable to comprehend the important data of the card number and expiration date of the payment card. Accordingly, the electronic commerce system is effective to prevent any third parties from impersonating the seller or the delivery service company.

Each of all the parties including the card holder communicates with other parties to which encrypted order data are to be transmitted prior to the transmission of the encrypted order data for thereby confirming the other parties. Therefore, the electronic commerce system is also capable of preventing any third parties from impersonating the card manager as well as the seller or the delivery service company.

The inventor of the present application conducted a test on the electronic commerce system to make various attacks on the electronic commerce system. As a result, it was found that the electronic commerce system was capable of withstanding those attacks.

In the embodiment, inasmuch as the data of the destination of delivery of the merchandise are encrypted using only the common cryptokey between the card holder and the delivery service company, the data of the destination cannot be comprehended by the seller and the card manager. Thus, when the card holders sends the purchased merchandise to a person other than the card holder, the privacy of that person is protected.

When the card holder buys merchandise, the encrypted order data are transmitted through the terminal 2 of the seller to the seller, the card manager, and the delivery service company. Because, the card holder needs to transmit the encrypted order data only to the terminal 2 of the seller, the procedure which the card holder needs to carry out to buy merchandise through online communications is relatively simple.

In the embodiment, the partial data with respect to the seller, the card manager, and the delivery service company are encrypted by the card holder, and the common cryptokeys used by the seller, the card manager, and the delivery service company to decrypt the partial data are generated simply when each of the parties enters the identifier of a certain party the secret private key in its terminal. Accordingly, it is not necessary for the parties to establish common cryptokeys or receive common cryptokeys distributed from a central organization each time a commercial transaction is to be made. The parties thus find it simple to conduct commercial transactions via online communications.

The electronic commerce system according to the present embodiment, therefore, is secure, simple and versatile.

While the parties to the electronic commerce system may include a delivery service company, the electronic commerce system may be constructed without the participation of a delivery service company, or may be constructed so as to include a gateway manager such as an Internet service provider, a key authentication office, etc. as parties to the electronic commerce system.

In the preferred embodiment, each of the parties generates a common cryptokey when it enters the identifier of a certain party into the secret private key in its terminal. However, the parties may use separately established common cryptokeys, or may receive common cryptokey distributed from a central organization.

Although a certain preferred embodiment of the present invention has been shown and described in detail, it should be understood that various changes and modifications may be made therein.

## Claims

1. A system for conducting transactions via online communications on a network between terminals of parties including a card holder having a data card, a card manager for managing transactions performed using such a data card and a third party,
the card holder terminal comprising:
means for encrypting with a first cryptokey, common to the card holder terminal and the card manager terminal, a first part of the data produced when a card holder terminal initiates a transaction using the data card;
means for encrypting with a second cryptokey, common to the card holder terminal and the third party terminal, a second part of said data; and
means for transmitting said data, including the encrypted first and second parts, onto the network;
the card manager terminal comprising:
means for receiving and decrypting the first part of said data using the first cryptokey; and
means for authorising the transaction by transmitting an authentication of the card holder to the third party terminal based on the decrypted, first part of the data; and
the third party terminal comprising:
means for receiving and decrypting the second part of said data using the second cryptokey; and
means for allowing the transaction between the card holder terminal and the third party terminal to proceed based on the decrypted, second part of the data when card holder authentication has been received from the card manager terminal.

2. A system according to claim 1, wherein the third party terminal is operable to receive said data and to retransmit at least the encrypted first part of said data to the card manager terminal so that the card manager terminal will receive the encrypted first part of said data via the third party terminal.

3. An electric commerce system for conducting commercial transactions via online communications on a network between terminals of parties including at least a seller, a card holder who uses a payment card to purchase merchandise from the seller, and a card manager for managing payments made by the payment card, comprising:
means in the terminal of the card holder, for encrypting partial data with respect to the parties other than the card holder with common cryptokeys which are effective only between the card holder and the parties other than the card holder, among order data produced when said card holder purchases merchandise from said seller using the payment card, and then transmitting encrypted order data including the encrypted partial data through the terminal of the seller to the parties other than the card holder;
means in the terminals of the parties other than the card holder, for decrypting only the encrypted partial data with respect to the parties other than the card holder, among said encrypted order data, using the respective common cryptokeys;
means in the terminal of the card manager, for allowing commercial transactions, including issuance of an authentication of said card holder to the seller, to be made with respect to said card manager, based on the partial data decrypted by the terminal of said card manager; and
means in the terminal of the seller, for allowlng commercial transactions, including delivery of the merchandise, to be made with respect to said seller, based on the partial data decrypted by the terminal of said seller and the authentication of said card holder issued from said card manager.

4. An electronic commerce system according to claim 3, wherein said order data include data of a destination of delivery of the merchandise, and said parties include a delivery service company, said data of the destination being encrypted using only a common cryptokey which is effective only between the card holder and said delivery service company, further comprising:
means in a terminal of the delivery service company, for allowing the delivery service company to deliver the merchandise based on the partial data, including the data of the destination, decrypted by the terminal of the delivery service company and instructions given from said seller.

5. An electronic commerce system according to claim 3 or 4, wherein said order data include data of a card number and expiration date of the payment card, and said data of the card number and expiration date are encrypted using only the colmnon cryptokey which is effective only between the card holder and said card manager.

6. An electronic commerce system according to claim 3, 4 or 5, further comprising:
means in the terminal of the card holder, for entering identifiers which are public and peculiar respectively to the parties other than the card holder into a secret private key peculiar to the card holder to generate said common cryptokeys which are effective only between the card holder and the parties other than the card holder; and
means in the terminals of the parties other than the card holder, for entering an identifier which is public and peculiar to the card holder into respective secret private keys peculiar to the parties other than the card holder to generate said common cryptokeys which are effective only between the card holder and the parties other than the card holder.

7. An electronic commerce system according to claim 3, 4, 5 or 6, wherein each of said parties communicates with other parties to which the encrypted order data are to be transmitted prior to the transmission of the encrypted order data for thereby confirming the other parties.

8. The card holder terminal of the system of any one of claims 1 to 7.

9. The card manager terminal of the system of any one of claims 1 to 7.

10. The third party terminal of the system of claim 1 or 2, or the seller terminal of any one of claims 3 to 7.

11. A method of conducting transactions via online communications on a network between terminals of parties including a card holder having a data card, a card manager for managing transactions performed using such a data card and a third party, the method comprising:
encryption by the card holder terminal with a first cryptokey, common to the card holder terminal and the card manager terminal, of a first part of data produced when a card holder terminal initiates a transaction using the data card;
encryption by the card holder terminal with a second cryptokey, common to the card holder terminal and the third party terminal, of a second part of said data;
transmission onto the network by the card holder terminal of the encrypted first part of said data for use by the card manager terminal and the encrypted second part of said data for use by the third party terminal;
decryption by the card manager terminal of the first part of said data using the first cryptokey;
transmission of an authorization of the card holder by the card manager terminal to the third party, the authorization being given based on the decrypted, first part of the data;
decryption by the third party terminal of the second part of said data using the second cryptokey;
allowing the transaction between the card holder terminal and the third party terminal to proceed based on the decrypted, second part of the data when card holder authentication has been received.

12. A method according to claim 11, wherein the transmission by the card holder terminal of the encrypted first part of said data to the card manager terminal is via the third party terminal.
